(19) Europäisches Patentamt
European Patent Office
Office européen des brevets

(11) Publication number: **0 255 161 A2**

(12) **EUROPEAN PATENT APPLICATION**

(21) Application number: 87201274.5

(51) Int. Cl.4: C09K 7/02

(22) Date of filing: 01.07.87

(30) Priority: 02.07.86 GB 8616163

(43) Date of publication of application: 03.02.88 Bulletin 88/05

(84) Designated Contracting States: DE FR GB IT

(71) Applicant: SHELL INTERNATIONALE RESEARCH MAATSCHAPPIJ B.V.
Carel van Bylandtlaan 30
NL-2596 HR Den Haag(NL)

(72) Inventor: Davidson, Colin James
Volmerlaan 6
NL-2288 GD Rijswijk(NL)

(74) Representative: Aalbers, Onno et al
P.O. Box 302
NL-2501 CH The Hague(NL)

(54) **Drilling fluid.**

(57) A drilling fluid comprising a stable oil in water emulsion consisting of

a) 50-96 %v water

b) 3-40 %v oil

c) 1-10 %v of at least one surfactant belonging to the class of alkyl amine ethoxylates having the formula:

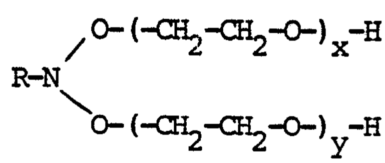

in which R is any hydrophobic organic group and x and y are integers >1, the sum of which is in the range of from 4-20.

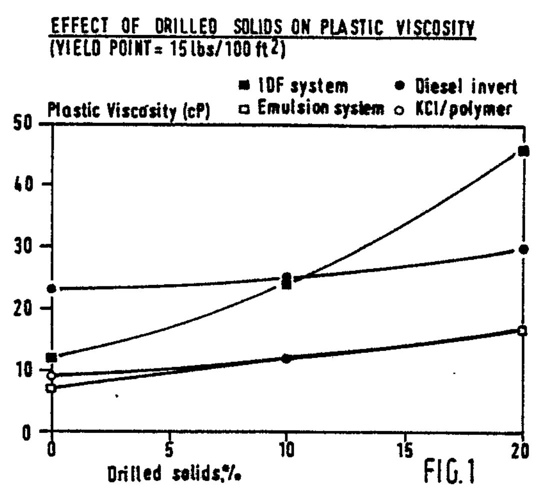


FIG.1

EP 0 255 161 A2

Xerox Copy Centre

# DRILLING FLUID

The invention relates to a drilling fluid comprising a stable oil in water emulsion consisting of

a) 50-96 %v water

b) 3-40 %v oil

c) 1-10 %v of at least one surfactant belonging to the class of alkyl amine ethoxylates having the formula:

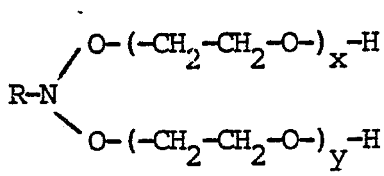

in which R is any hydrophobic organic group and x and y are integers >1, the sum of which is in the range of from 4-20.

When drilling subterranean wells such as, for example, oil or gas wells, the rotary drilling method is commonly employed. The rotary drilling method utilizes a bit attached to a drill stem, and a drilling fluid or "mud" which is circulated through the drill stem to the bottom of the borehole where it is ejected through small openings in the drill bit. The fluid is then returned to the surface through the annular space between the drill stem and the borehole wall, or casing if one has been installed. Upon reaching the surface, the drilling fluid or "mud" is ordinarily treated to remove cuttings obtained from the borehole, and is then recirculated.

Drilling fluids serve many functions, and should therefore possess a number of desirable physical and rheological properties. For example, the viscosity of a drilling fluid should be sufficient to permit it to effectively transport bit cuttings from the bottom of the borehole to the surface for removal. A drilling fluid should also prevent excessive amounts of fluid from flowing from the borehole into surrounding formations by depositing on the wall of the hole a thin but substantially impervious filter cake. In addition, a drilling fluid should be able to hold solids in sus pension, preventing their return to the bottom of the hole when the circulation is reduced or temporarily interrupted. This property can be obtained by utilizing additives which will impart a gel structure to the drilling fluid to increase viscosities. The gel structure, however, is preferably such that cuttings can be removed from the drilling fluid by passing the fluid through filtration equipment such as a shale shaker and/or sand cyclones prior to recirculating the fluid to the drill bit. A drilling fluid must also exert pressure on the surrounding formations, thus preventing possible collapse of the borehole or influx of highly pressurized oil or gas in the formation. Finally, a drilling fluid should serve as a lubricating and cooling agent for the drill string and the bit.

Drilling of easily dispersible formations such as shales, marls and chalks often presents a problem in mud solids control. Drilled solids tend to disintegrate in the drilling fluid while being transported to surface and the fines thus created are very difficult to remove. A build-up of fines is the consequence and leads to an increased viscosity of the drilling fluid and a decreased rate of penetration of the drilling operation. Ultimately mud dilution is required to recondition the mud or drilling fluid.

A method to combat drilled solids disintegration is the application of the drilling fluid according to the invention. This "mud" prevents disintegration of cuttings and so delays the build-up of fines.

In addition the present invention relates to a concept in mud engineering which involves the drilling of a well by the use of an oil in water emulsion which deposits its oil phase onto mineral surfaces. In this manner the interaction of the water phase of the mud and troublesome shale zones is greatly lowered or prevented completely and this facilitates the easy drilling of the well.

A preferred composition of the mud system according to the invention is as follows:

a)87-93 %v water

b) 4-8 %v oil

c) 3-5 %v surfactant. The heart of the system is the nature of the surfactant interfacial phase, i.e. at least one alkyl amine ethoxylate which acts both to disperse the oil phase throughout the aqueous phase and also to coat it out onto mineral surfaces, including troublesome shale zones. What distinguishes the present system from those previously existing is the effectiveness of the coating in preventing the undesirable water-shale interactions and the ease with which it is incorporated into typical drilling fluid

systems. The alkyl amine ethoxylates are essential for the present drilling fluid and none of the surfactants used in the drilling muds according to the existing patent specifications or present in the commercially available systems give as good results as the alkylamine-ethoxylates.

The alkyl amine ethoxylates are commercially available surfactants with the following chemical formula:

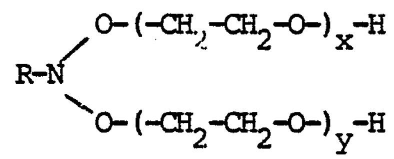

The "R" group may be any hydrophobic organic group, aliphatic or aromatic saturated or unsaturated, straight chained or branched and a preferred set of groups are those derived from tallow. The number of ethylene oxide units is chosen to balance the particular hydrophobic group in any particular case and hence provide the desireable emulsification and wetting properties. When the "R" group is derived from tallow, the preferred number of ethylene oxide groups is approximately 15, but this can vary considerably depending upon the expected conditions of use. For low or moderate temperatures, approximately 5 units will suffice and in conditions of very high temperatures or very high salinity, more than 15 may be necessary.

These surfactants form stable oil in water emulsions over a wide composition range, for example:
75% water/20% oil/5% surfactant
50% water/40% oil/10% surfactant

These compositions are intended to be illustrative and not exhaustive and the exact one chosen for any particular application will depend upon the exact nature of the problem. Obviously, for both environmental and cost considerations the minimum oil/surfactant phase necessary to effectively coat the wellbore and cuttings surfaces is desirable but balanced by the need to maintain the fluid properties without constant new chemicals addition as the well is deepened. This amount must be selected for any given case with a knowledge of the sensitivity of the particular shale being penetrated and of the operating conditions (drilling rate etc.) being used. In the laboratory a 90% water/6% oil/4% surfactant composition has been found to provide good shale inhibition and fluid maintenance properties for two particular shale types tested (Pierre and Hutton shale) but this is in no way the only composition which could be used or even the most desirable in any given field application.

The oil phase is taken to mean any aqueous immiscible fluid which can be successfully emulsified by the surfactant phase and coated out onto mineral surfaces to reduce their interaction with the aqueous phase. Examples of these include mineral oils such as diesel or napthenic oils such as Shellsol DMA® and also vegetable or other natural oils.

The aqueous phase is taken to mean water or any solution in which water is the solvent such as sea water or where electrolytes or other chemicals are deliberately added to achieve or enhance useful fluid properties. To enhance the inhibiting effects of the emulsions in cases of highly swelling shales it is advantageous to add a 1-15 per cent of a potassium salt such as potassium chloride to the water base.

To be useful as a well drilling fluid it is suitable to build certain other properties into such emulsions including desirable rheologies, densities and fluid loss characteristics and these are achieved using the standard technology of mud enigneering summarized below.

Desirable rheologies are normally obtained using either clay suspensions or dissolved polymers. The list of possibilities is enormous but generally the common mud viscosifiers such as prehydrated bentonite or Xanthan gum have been found to be preferred. These are intended to be advantageous and illustrative examples and not exhaustive and any viscosifier which imparts a useful drilling fluid rheology and is compatible with the other system components may be considered.

The variation of fluid density is achieved using the standard technology of mud enigneering and usually by the suspension of high density solids such as barium sulphate in the viscosified fluid. The adjustment of the filtration properties of the emulsions is again carried out using the standard technology of mud engineering by the addition of suspended clays or dissolved polymers such as bentonite, carboxymethyl cellulose or starches etc.

The invention does not only related to the formulation of oil in water emulsions which coat out onto shale or other mineral surfaces but also to the incorporation of such an emulsion into a fluid useful for well drilling completing and working over, using the standard available mud technology. This is particularly important when one considers the system described in US patent specification No. 4,411,801 which when

formulated according to instructions contained therein forms a very viscous Bingham plastic fluid (yield point = 424 lbs/100 sqft, plastic viscosity = 250 cP). This fluid rheology is not useful for well drilling purpose irrespective of its shale inhibiting properties. Dilution by the aqueous phase by 100% and other attempts to build this fluid into one useful for well drilling failed.

## Example

The cuttings dispersion test, used to evaluate the interaction between shale cuttings and particular drilling fluids is carried out as follows:

Shale (in this case Hutton shale from the U.K. North Sea, and Pierre shale from the USA) is ground and sieved and the fraction between sieves 1.7-2.7 mm is collected and equilibrated with water. Twenty grams of equilibrated shale cuttings is immersed in 350 mls of the drilling fluid and rolled at 50 rpm and 60 degrees centrigrade for 24 hours. After this time the cuttings are collected over a 1.4 mm sieve, washed, dried, re-equilibrated with water and the percentage weight loss of the cuttings calculated. If there was a very large interaction between the fluid and the shale cuttings the shale will have dispersed into very small particles and hence little will be collected over the 1.4 mm sieve; conversely, if there was little interaction between the shale cuttings and the drilling fluid the cuttings will have largely remained the same dimensions and up to 100% will be collected.

Thus rolling the cuttings in pure diesel oil results in 100% recovery while rolling in pure water results in 0% recovery and it is therefore concluded that there is little interaction between the diesel oil and the cuttings but a large interaction between the water and the cuttings. All the "real" drilling fluids were evaluated on this scale.

The cuttings dispersion test gives a reasonable idea of the extent of the interaction, chemical and mechanical, between the drilling fluid and the shale cuttings and has been found in the laboratory to be accurate to within 2 per cent.

The results of some cuttings dispersion tests are given below, the higher the percentage recovery the less is the interaction between the shale and the fluid and hence the better the performance of the fluid.

The shale inhibiting drilling fluids are of three types;

1) Oil Based Muds known in the industry as "invert" muds.

2) Water based muds containing potassium salt and polyacrylamide polymer known in the industry as KCl/polymer muds.

3) An oil in water emulsion (IDF-system) commercially available from IDF (International Drilling Fluids Company) and

4) the emulsion according to the invention: 90 %v aqueous phase/6 %v oil/4 %v alkylamineethoxylate (derived from tallow, x + y = 15). The latter will be called "present emulsion system". All muds were formulated to have a yield point of 15 and were unweighted.

| MUD TYPE | SHALE TYPE | % RECOVERY |
|---|---|---|
| Present Emulsion Mud | Hutton | 98 |
| " " " | Pierre | 100 |
| Commercial Emulsion Mud | Hutton | 82 |
| " " " | Pierre | 27 |
| KCl/Polymer Mud | Hutton | 88 |
| " " " | Pierre | 90 |
| Diesel Invert Mud | Hutton | 80 |
| " " " | Pierre | 75 |
| Shellsol® DMA Invert Mud | Hutton | 78 |
| " " " " | Pierre | 72 |
| Non Inhibitive Mud | Hutton | 24 |
| " " " | Pierre | 7 |

10 %wt KCl in water was the aqueous phase for all the water based mud systems.

On the basis of the cuttings dispersion tests the present system is seen to compete very favourably with the standard inhibitive muds and the commercially available emulsion mud and gives an improved performance in all cases. The commercially available emulsion mud is shown to give a performance equivalent to a completely unhibitive system in some cases.

Since sea water is often used as the base aqueous fluid in offshore locations the emulsion muds were compared with each other, seawater being the aqueous phase.

| MUD TYPE | SHALE TYPE | % RECOVERY |
|---|---|---|
| Present Emulsion Mud | Hutton | 95 |
| " " " | Pierre | 98 |
| Commercial Emulsion Mud | Hutton | Sludge |
| " " " | Pierre | 28 |
| Uninhibitive Mud | Hutton | 44 |
| " " " | Pierre | 24 |

The superiority of the present system is clearly demonstrated in the case of a seawater aqueous phase where the commercial emulsion mud is seen to act as either a completely uninhibitive system or, worse to interact with the drilled cuttings so as to produce a thick sludge which would be difficult to remove from the bore hole.

A mud does not remain in its original state for long when used in drilling operations and is usually quickly contaminated by the drilled solids of the formations, particularly shale, being penetrated. The cuttings dispersion tests indicate that this tendency will be better avoided in using the present emulsion muds than with the other common inhibitive muds and worse with the commercially available systems. The two attached figures show the effect of contamination by drilled solids on the rheology of some typical inhibitive drilling fluids. Ideally what is technically desired in this situation is that the defined yield point * remains constant or at least does not increase to a very great extent and that the plastic viscosity remains as low as possible. The two figures show that the commercial emulsion system behaves completely different from the others and greatly viscosifies when it is contaminated by drilled solids. The yield point rises to over 80 lbs/100 sq ft, an impractical level for a drilling fluid and the plastic viscosity, also increases its value by a factor of four. The other systems are shown to behave reasonably, their yield points only increasing slowly with added drilled solids and the water based systems are found to give lower plastic viscosities than the invert mud system.

The shale inhibiting properties of the various muds can also be affected by the presence of drilled solids (D.S.):

* Yield point = yield value as defined in the book "Composition and properties of oil well drilling fluids" by W.F. Rogers, Gulf Publishing Co. (1953) p. 232.

| MUD TYPE | SHALE TYPE | % RECOVERY |
|---|---|---|
| Present Emulsion Mud | Hutton | 98 |
| " " " + 10% D.S. | Hutton | 100 |
| " " " | Pierre | 100 |
| " " " + 10% D.S. | Pierre | 100 |
| KCl/Polymer Mud | Hutton | 88 |
| " " " + 10% D.S. | Hutton | 65 |
| " " " | Pierre | 96 |
| " " " + 10% D.S. | Pierre | 90 |
| Diesel Invert Mud | Hutton | 79 |
| " " " + 10% D.S. | Hutton | 100 |
| " " " + 10% D.S. | Pierre | 75 |
| " " " + 10% D.S. | Pierre | 100 |

The present emulsion system is seen to behave more consistently than the other standard inhibitive muds giving good results in both the presence and absence of drilled solids and with both Pierre and Hutton shale samples. The performance of the KCl/Polymer mud generally decreases in the presence of the drilled solids while that of the invert mud increases.

## Claims

1. A drilling fluid comprising a stable oil in water emulsion consisting of
   a) 50-96 %v water
   b) 3-40 %v oil
   c) 1-10 %v of at least one surfactant belonging to the class of alkyl amine ethoxylates having the formula:

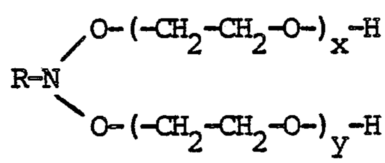

in which R is any hydrophobic organic group and x and y are integers >1, the sum of which is in the range of from 4-20.

2. A drilling fluid as claimed in claim 1 in which the hydrophobic group is derived from tallow.

3. A drilling fluid as claimed in any one of the preceding claims in which 4-8 %v oil and 3-5 %v surfactant is present.

4. A drilling fluid as claimed in any one of the preceding claims in which from 1 to 15 %wt of a potassium salt is present.

5. A drilling fluid as claimed in any one of the preceding claims in which a clay suspension is present.

6. A drilling fluid as claimed in claim 5, in which xanthan gum is present.

7. A process for drilling, completing or working over a well in an underground formation in which process a drilling fluid as claimed in any one or more of the preceding claims is circulated.

EFFECT OF DRILLED SOLIDS ON PLASTIC VISCOSITY
(YIELD POINT = 15 lbs/100 $ft^2$)

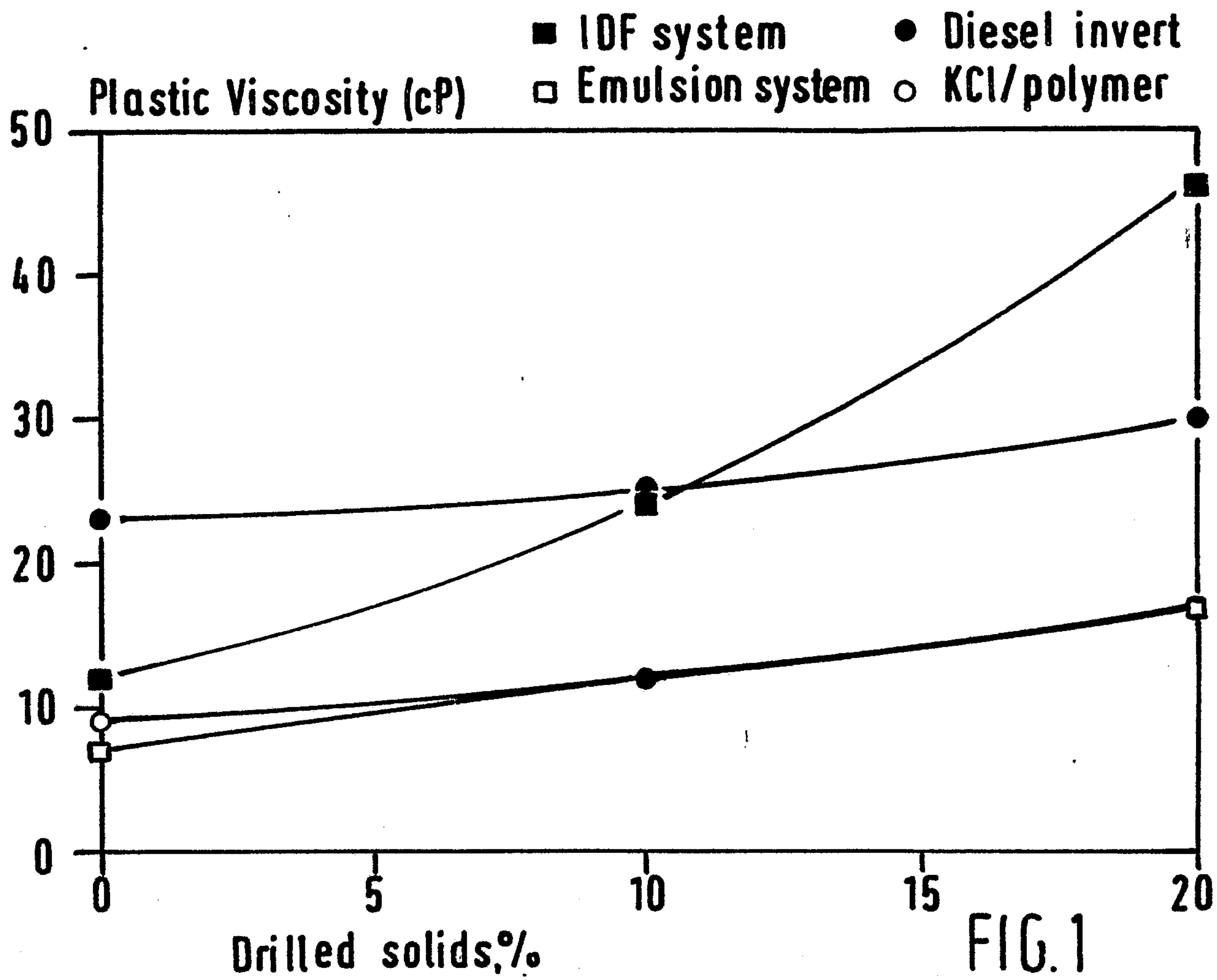


FIG.1

EFFECT OF DRILLED SOLIDS ON YIELD POINT

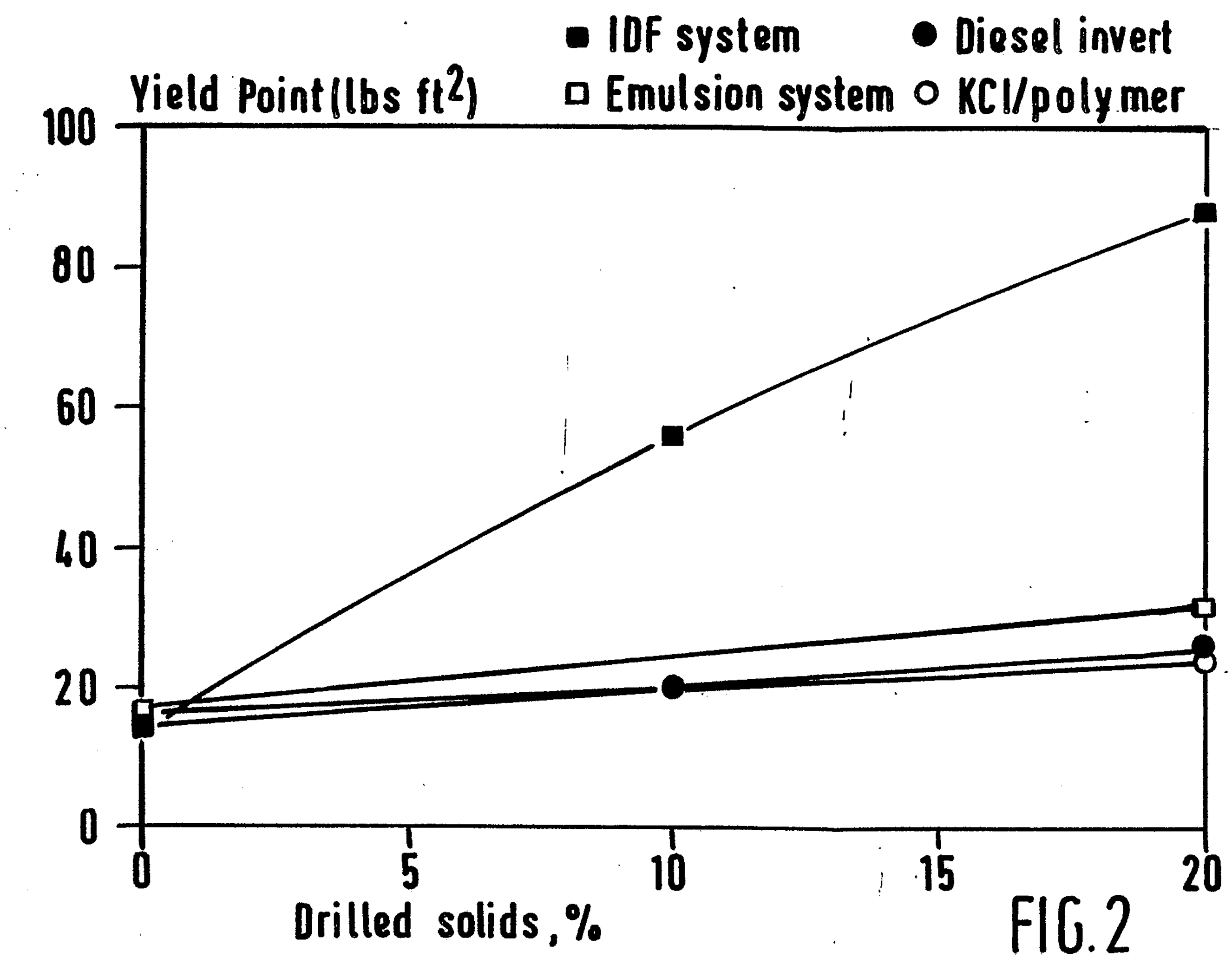


FIG. 2